# EUROPEAN PATENT APPLICATION

(11) **EP 2 341 412 A1**
(43) Date of publication of application: **06.07.2011**
(21) Application number: 09252940.3
(22) Date of filing: 31.12.2009
(51) Int. Cl.: G06F 1/16, G06F 3/048, G06F 3/033, G06F 3/03

(54) **Portable electronic device and method of controlling a portable electronic device**

(71) Applicant: Sony Computer Entertainment Europe Limited, London W1F 7LP (GB)
(72) Inventor: The designation of the inventor has not yet been filed
(74) Representative: Turner, James Arthur

(57) **Abstract**

A portable electronic device (10) comprises an image field (500) generator operable to generate a two-dimensional image field (500), and a display (200) operable to display an image region (520) corresponding to a portion of the two-dimensional image field so that the device appears to be positioned at an image viewing position with respect to the two-dimensional image field. The device further comprises a motion detector operable to detect motion (514) of the device with respect to a real- world environment, and a controller operable to control display of the image region so that the image viewing position moves with respect to the two-dimensional image field in response to detected motion of the device.

## Description

The present invention relates to a portable electronic device and a method of controlling a portable electronic device.

A trend among current portable or pocketable electronic devices such as mobile phones, so-called 'smart-phones', music players, videogames and the like is to become both smaller and provide more features over time. This may be in the form of so-called 'convergence', where, for example, mobile phones now frequently incorporate still or video cameras, or where media players are also capable of playing some video games. Furthermore, the features provided by a particular type of device may increase as implementations of existing device features become more complex.

A consequence of this trend is that the user interface of the device itself may also become more complex to accommodate control of ever more features. A common approach has therefore been to adopt touch-screens, which have an advantage that controls for different functions are simply graphics to be displayed on the screen, and hence the physical size of the device no longer imposes a limit on the number of controls possible.

Typically, the user interacts with such a touch screen by holding the device in one hand and moving a finger of their other hand around the screen, tapping on icons or other controls displayed by the device to issue commands to it. To help make graphical user interfaces attractive and easier to use on a small touch screen, typically multiple "icon pages" of icons are used to provide access to functions of the device. To navigate these icon pages to select an icon, a user may typically repeatedly move a finger over the screen to move between the icon pages.

However, where there are a large number of icons to be displayed, for example where only a small percentage (e.g. 10 %) of the icons can be displayed on the display at once, it can be time consuming and frustrating for the user to repeatedly move their finger many times across the touch screen to access a desired icon. Furthermore, the user's finger may obscure at least some of the display when they are moving between icon pages. This hinders the selection of a desired icon because a user may inadvertently move past an icon page comprising a desired icon without noticing it, especially if they are using the device to move quickly between icon pages.

Additionally, where images such as pages of a book (book pages) are to be displayed, typically, not all of a page of a book may be seen at once and the detail of the page easily viewed. Furthermore, navigation around the page, for example by touch and dragging the image of the page, can obscure the displayed image, making it difficult to find a desired place on the page and breaking the flow of the reading experience.

The present invention seeks to alleviate or mitigate the above problems.

In a first aspect, there is provided a portable electronic device comprising: an image field generator operable to generate a two-dimensional image field; a display operable to display an image region corresponding to a portion of the two-dimensional image field so that the device appears to be positioned at an image viewing position with respect to the two-dimensional image field; a motion detector operable to detect motion of the device with respect to a real-world environment; and a controller operable to control display of the image region so that the image viewing position moves with respect to the two-dimensional image field in response to detected motion of the device.

In a second aspect, there is provided a method of controlling a portable electronic device, the method comprising: generating a two-dimensional image field; displaying, on a display, an image region corresponding to a portion of the two-dimensional image field so that the device appears to be positioned at an image viewing position with respect to the two-dimensional image field; detecting motion of the device with respect to a real-world environment; and controlling display of the image region so that the image viewing position moves with respect to the two-dimensional image field in response to detected motion of the device.

Advantageously, embodiments of the present invention provide an intuitive way of navigating around an image (such as a page of a book or graphic novel) or between icon pages. For example, two-dimensional image field can comprise a page of a graphic novel. Accordingly, the user can move the device to view the page of the graphic novel, for example to perform viewing operations such as panning, zooming or cropping. For example, a user can access different book pages or icon pages by moving the device left or right. This allows rapid navigation. Embodiments of the present invention thus allow intuitive and quick navigation around a page (such as an icon page or book page) or image without a user having to change their grip on the device or obscure the display with a finger, thereby improving a navigation and reading experience for the user.

The portion is preferably smaller than the whole image field.

Embodiments of the present invention will now be described by way of example with reference to the accompanying drawings, in which:
Figures 1A and 1B are schematic diagrams of a portable electronic device in accordance with an embodiment of the present invention;
Figure 2 is a schematic diagram of a portable electronic device in accordance with an embodiment of the present invention;
Figure 3 is a schematic diagram of a portable electronic device in accordance with an embodiment of the present invention;
Figures 4A and 4B are schematic diagrams of a portable electronic device and an icon field in accordance with embodiments of the present invention;
Figures 5A and 5B are schematic diagrams of a portable electronic device and an image field comprising function fields in accordance with embodiments of the present invention;
Figure 6 is a schematic diagram of a portable electronic device and an image field in accordance with embodiments of the present invention;
Figure 7 is a schematic diagram of a portable electronic device comprising a light source in accordance with embodiments of the present invention; and
Figure 8 is a flowchart of a method of controlling a portable electronic device in accordance with embodiments of the present invention.

A portable electronic device and a method of controlling a portable electronic device are disclosed. In the following description, a number of specific details are presented in order to provide a thorough understanding of embodiments of the present invention. It will be apparent however to a person skilled in the art that these specific details need not be employed to practise the present invention. Conversely, specific details known to the person skilled in the art are omitted for the purposes of clarity in presenting the embodiments.

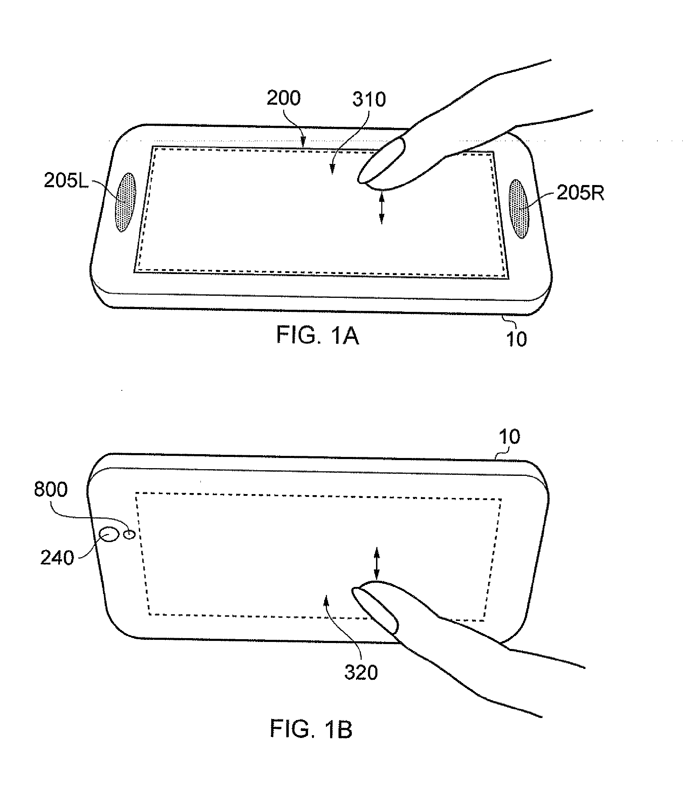

Figures 1A and 1B illustrate an embodiment of a portable electronic device (PED) 10. Figure 1A shows a notional front or top face of the PED, whilst Figure 1B shows a notional rear or bottom face of the PED. The front and rear sides are substantially parallel to each other.

On the front face, the PED comprises a display 200 and optionally one or more loudspeakers 205L, 205R.

On the rear face, the PED comprises a rear touch sensitive surface 320 (indicated by the dotted lines in Figure 1A) having similar dimensions to the display 200. The rear touch sensitive surface is positioned so as to be substantially aligned with the display. That is to say, considered in a direction normal to the plane of the display, the rear touch sensitive surface substantially overlies the display.

A transparent front touch sensitive surface 310 (indicated by the dotted lines) is also provided coincident with (i.e. the display 200. The front and rear touch sensitive surfaces and the display thus have similar dimensions and placements on their respective sides of the device. The touch sensitive surfaces also have a similar resolution of touch localisation. In some embodiments, the device 10 comprises a video camera 240 and a light source 800 arranged on the rear side of the device 10 as illustrated in Figure 1B. The operation of these will be described in more detail later below. However, it will be appreciated that the video camera 240 could be positioned anywhere on the device as appropriate.

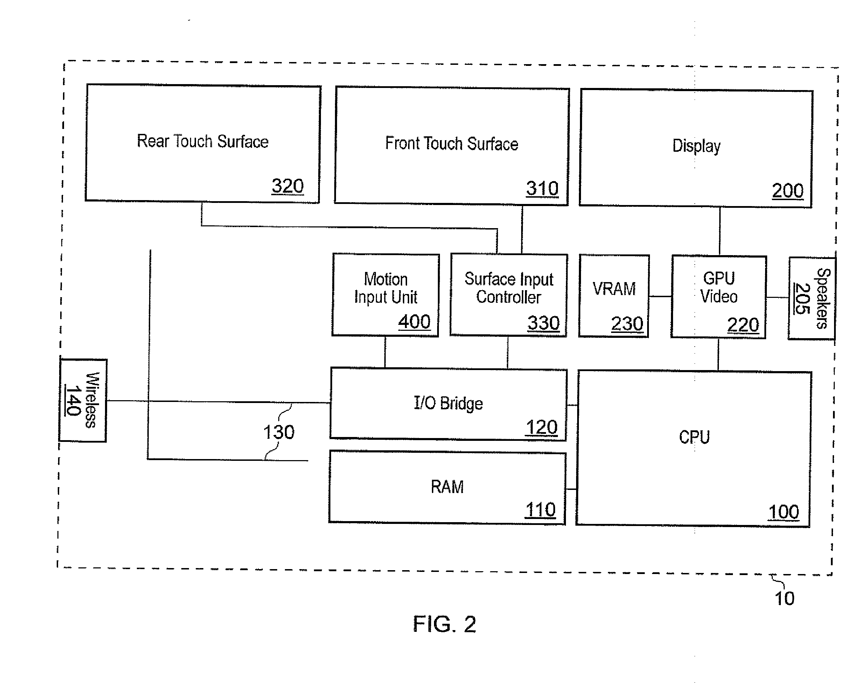

Referring now to Figure 2, an embodiment of the PED comprises a central processing unit (CPU) 100 coupled to random access memory (RAM) 110, and optionally to a read only memory (not shown). In addition the CPU communicates with a graphics processing unit (GPU) 220. The GPU has access to video RAM (VRAM) 250. The GPU outputs audio to loudspeakers 205L,R (only one shown for clarity) and/or to a headphone jack socket (not shown). The GPU also outputs video information to the display 200. The display is typically a liquid crystal display (LCD) but may be an organic light emitting diode display (OLED) or similar suitable display technology.

In addition, the CPU communicates with an input / output bridge (I/O bridge) 120 that co-ordinates communication with peripheral components both integral to and linkable with the PED. In an embodiment of the PED the I/O bridge communicates with a surface input controller 330, which parses inputs from the rear touch sensitive surface 320 and the transparent front touch sensitive surface 310. The I/O bridge also communicates with motion input unit 400 comprising one or more micro electromechanical (MEMs) accelerometers and/or gyroscopes, to provide up to six axes of motion input (x, y and z axis lateral movement and roll, pitch and yaw rotational movement). The I/O bridge also communicates with a bus 130, upon which various peripheral devices may be linked, including one or more wireless communication units 140, such as for example WiFi and / or Bluetooth ® communication units.

It will be appreciated that the CPU 100 may be a single core or multi core processor. Similarly, the RAM may be dynamic RAM or may comprise both dynamic RAM and static (e.g. flash) RAM units. Likewise, whilst the GPU typically uses dedicated VRAM, alternatively or in addition it may share common RAM with the CPU. Finally, it will be appreciated that the function of the surface input controller 330 may be performed by the CPU itself.

The rear touch sensitive surface may be a conventional capacitance touchpad or panel such as that found in laptop computers or portable telephones. Such a touchpad typically comprises two layers of parallel conductive lines separated by an insulator and arranged at right angles to one another. A high frequency signal is swept through every respective pairing of lines between the two layers. The measurable current for each pair is then proportional to the capacitance at their point of intersection. When a user's finger is placed at or near that intersection, however, some of the electrical field between layers is shunted to ground, changing the effective capacitance and hence the measured current. Precise localisation of the user's finger can be achieved by measuring changes in capacitance at nearby points of intersection, which will be proportional to their respective distances from the finger. So-called multi-touch operation of the touchpad can be achieved by detecting distinct peaks in capacitance change at separate intersection points on the pad. Meanwhile, movement of a user's finger or fingers can be estimated from successive points of intersection where contact is detected.

A front touch sensitive surface for use with the display operates in a similar manner to the rear touch sensitive surface, but in this instance the conductive lines are typically transparent (as a non limiting example, being formed by a deposition of indium tin oxide), and the insulator between two layers is provided by all or part of the display window (e.g. a glass layer); typically a further transparent protective layer is then provided on top of the upper conductive layer.

It will be appreciated however that any suitable touch sensitive technique may be used for either touch panel.

It will also be appreciated that whilst not shown in the figures for the purposes of clarity, the PED comprises power distribution lines to various components and one or more sources of power, such as an input socket (for example a conventional DC power socket, or alternatively or in addition a USB socket). Such an input socket may also be used to charge one or more batteries (also not shown). Such batteries may be user removable or may be sealed in the device. Other components not shown include, for example, an optional microphone.

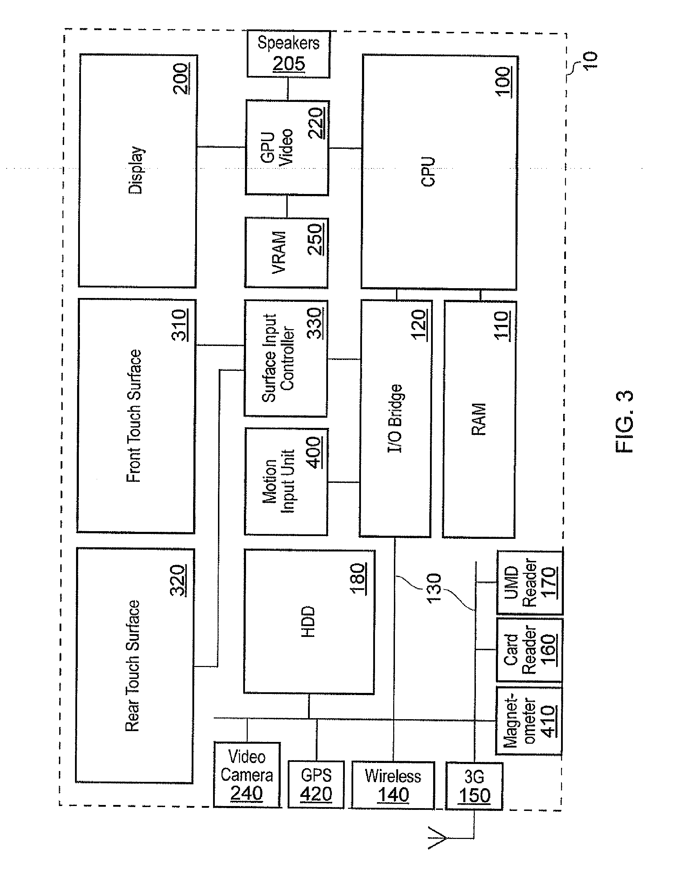

Referring now also to Figure 3, an embodiment of the PED may comprise one or more additional components, either integrated within the device or connectable to it. The additional components include, but are not limited to, the following.
a) A card reader 160 suitable for reading from and optionally writing to memory cards, such as a Sony ® Memory Stick ® card, or alternatively legacy memory cards such as those used by the Sony ® Playstation 2 ® entertainment device. Such a reader may be integral to the PED or may connect to the bus 130 via a USB connection.
b) A universal media disk (UMD) reader 170 or other optical disk reader (such as a DVD or Blu-Ray® disk reader), for accessing media and/or game content stored thereon. Such a reader may be removably connectable to the bus 130 via a USB or proprietary connection.
c) A magnetometer 410 for determining compass direction (i.e. the current absolute orientation of the device), mounted integral to the PED either on the bus 130 or as part of the motion input unit 400.
d) A third generation (3G) or other mobile telephony module 150. in an embodiment, the module and aerial are integral to the PED, and optionally the aerial is shared with or otherwise coupled electromagnetically with other wireless units in the device for the purpose of transmission and reception. Alternatively the module may be removably connectable to the PED, for example via USB port or a Personal Computer Memory Card International Association (PCMCIA) slot.
e) A hard disk drive (HDD) 180 integral to the PED, providing bulk storage for audio / video media, downloaded games, and the like.
f) A GPS receiver 420. Again the GPS receiver may share an aerial with one or more other wireless units (such as WiFi) within the PED or may use its own aerial. Map information, where used, may be stored locally at the receiver, or in flash RAM of the PED, or on an HDD of the PED.
g) A video camera 240, typically comprising a charge coupled device (CCD) optical sensor and suitable optics for imaging onto the CCD. The resolution of the CCD may for example be 640x480 pixels, but may be any suitable resolution, such as for example 1920x1080 pixels (full HD). In an embodiment the video camera is integral to the PED, but alternatively may be removably connectable to the bus 130 via a USB or proprietary connection. An embodiment of the PED comprises two such video cameras 240, forming a stereoscopic pair.

In operation, the CPU accesses an operating system that is resident for example on a ROM, flash RAM or a hard disk. The operating system co-ordinates operation of the various functions of the PED and presents a user interface to a user of the device. The user interface will typically comprise graphical outputs via the display and touch based inputs, but may also include audio outputs and/or motion-based inputs.

The touch based inputs to the PED are peculiar to the arrangement of a display on the front of the PED and a correspondingly positioned touch sensitive surface (or 'panel') on the rear of the PED. This allows the user to treat the rear panel as a proxy for the display (in other words, address actions and inputs to the rear touch panel as if to the display, and/or point to the panel in order to point to the display). Thus for example, the user can point to icons or other displayed features from apparently underneath the display by touching the rear touch panel at the corresponding position.

It will be appreciated that unlike a laptop touch panel, the rear touch panel has a substantially 1:1 scale relationship with the screen, thereby not just enabling motion of a mouse pointer on screen that corresponds to motion of touch on the panel (for example), but furthermore also enabling direct placement of such a mouse on the screen at the position corresponding to the touch on the panel, because as noted above the panel can be understood to represent the screen (i.e. act as a proxy).

Because of the relative orientation of the display and the rear touch panel, left-to-right mapping across the rear touch panel is therefore reversed to correspond to the appropriate position on the display. Optionally this reversal is switchable depending on the orientation of the device as detected by the motion input unit, and/or according to what peripheral devices are connected; for example if the PED were connected to a television and then held display-down for use, the left-to-right mapping of the touch panel input may not be reversed.

Use of the rear touch panel as a proxy for the display advantageously allows interaction with the graphical output of the device without the user's hand or fingers obscuring the display or marking the display window.

In addition, the subjective experience of controlling the displayed interface from behind or underneath the screen allows for new modes of user interaction; for example selection, highlighting or magnification of a screen element may be achieved by a user pushing the element 'toward' them (i.e. with finger pressure on the rear panel) from behind the device. For a capacitance based touch panel, an increase in pressure on the rear panel (i.e. a push) can be detected by a flattening of the user's finger, which results in a larger covered area and hence more points of intersection in the panel having reduced capacitance. Conversely a reduction in pressure reduces the number of intersection points where touch is detected.

In conjunction with a similar but transparent front touch sensitive surface overlaid on the display, further modes of interaction become possible. For example, objects may be selected by being pinched between thumb and forefinger, with the thumb and forefinger touching the front and back touch panels respectively. The object may then be moved around, and, for example, activated by using a squeezing action between thumb and forefinger.

Further modes of interaction rely on the correspondence between position and / or motion of the user's fingers on the two touch panels. For example in a video playback application, stroking a finger across only the top touch panel may be interpreted as a fast-forward or rewind command (depending on direction), whilst a pinch hold followed by corresponding movement left or right of both fingers may be interpreted as selection of a specific point in playback (i.e. where the total playback time is scaled to the width of the touch panels). By contrast, however, a pinch hold followed by both fingers moving in opposite directions to each other may be interpreted as a twisting action, and adjusts a virtual volume dial. A similar grammar of interaction could be used for example for document or e-book navigation, with scrolling, page selection and zoom replacing the above playback functions.

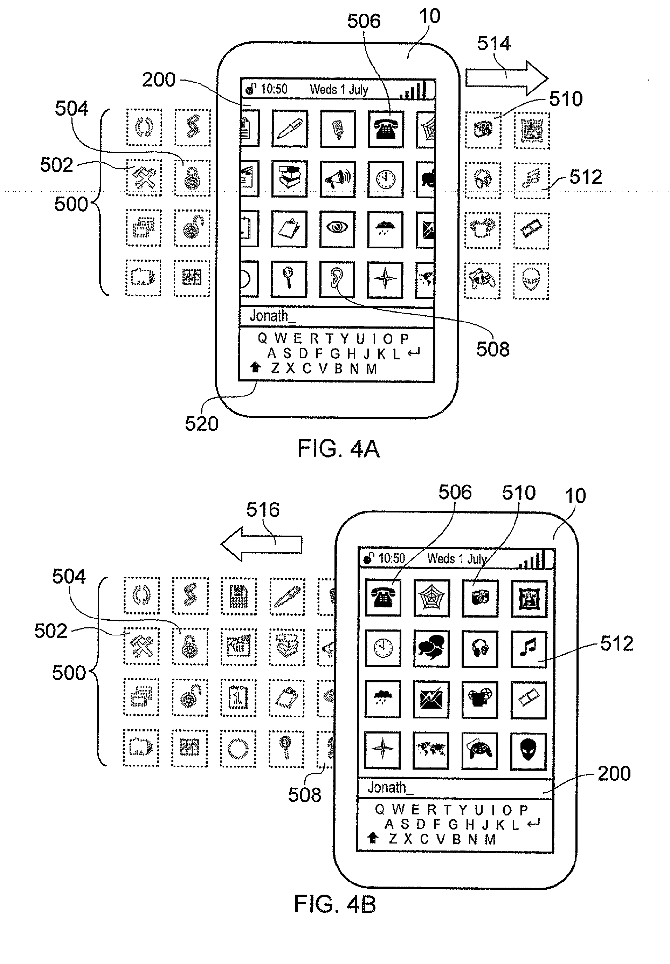

Embodiments of the present invention will now be described with reference to Figures 4 to 8.

Figures 4A and 4B are schematic diagrams of a portable electronic device and an icon field in accordance with embodiments of the present invention. In particular, Figure 4A shows the device 10 together with an icon field 500. The icon field 500 comprises a plurality of icons such as an icon 502 (which shows a symbol corresponding to a crossed hammer and spanner), an icon 504 (which shows a symbol corresponding to a padlock), an icon 506 (which shows a symbol corresponding to a telephone), an icon 508 (which shows a symbol corresponding to an ear), an icon 510 (which shows a symbol corresponding to a camera), and an icon 512 (which shows a symbol corresponding to musical notes). In the embodiments illustrated in Figures 4A and 4B, the icon field 500 comprises 36 icons (arranged as four rows and nine columns of icons). However, it will be appreciated that the icon field could comprise any suitable number of icons in any suitable arrangement as appropriate.

In embodiments, a user is able to select a function associated with an icon to cause the device to activate that function by user input to the front touch sensitive surface 310. For example, the icon 506 (a telephone) could be associated with a telephone function of the device. The user could touch the front touch sensitive at a position corresponding to the icon 506 to activate the telephone function for example to make a telephone call. More generally, in embodiments, the device comprises function control means (such as the CPU 100, surface input controller 330, I/O Bridge 120) operable to control a function of the device in response to user input to the first touch sensitive surface 310.

To achieve this functionality, in some embodiments, the device 10 is operable to detect input to the front touch sensitive surface 310 as described above. The CPU 100 is then operable to detect whether a position at which input to the front touch sensitive surface 310 occurred corresponds to a position of an icon displayed on the display 200. If so, then the CPU 100 is operable to activate a function associated with that icon. In other words, more generally, the CPU 100 is operable to activate a function (e.g. a telephone function) associated with an icon in response to user input to the front touch sensitive surface 310 at a position on the display corresponding to that icon.

However, where the device has many functions, each associated with an icon, the display may be too small to display all of the icons at a size where they can easily be selected by a user. For example, it may be difficult for user to select an icon if the icon is displayed to be smaller than the user's fingertip. Therefore, in some embodiments, the icon field 500 is larger than an image area of the display 500 (for example as illustrated in Figure 4A) so that the icons can be displayed at a size which makes it easier for a user to select an icon. For example, each icon can be displayed so that it is larger than the size of an average user's fingertip.

In embodiments, the device is operable to display a subset of the icons in the icon field 500 on the display 200, as illustrated in Figure 4A. In the embodiment shown in Figure 4A, the device is operable to fully display twelve icons towards the middle of the display 200 and partially display four icons towards the left of the display and four icons towards the right of the display. However, it will be appreciated that any suitable number of icons could be displayed, for example depending on the display size and the icon size.

In order to allow a user to select an icon from the icon field 500 which is not displayed on the display 200, in embodiments, the CPU 100 is operable to use data from the motion input unit 400 to control the display so that the portion of the icon field 500 displayed on the display moves with detected motion of the device. For example, if a user wishes to view the right-hand side of the icon field 500, they may move the device 10 to the right as illustrated by arrow 514 in Figure 4A. The motion input unit 400 detects the movement of the device 10 and, in response, the CPU 100 controls the display of the icon field 500 so that icon field 500 appears to move to a position where a right-hand portion of the icon field 500 is displayed on the display 200. This is illustrated in Figure 4B.

Figure 4B schematically shows the device 10 together with the icon field 500. In Figure 4B, sixteen icons towards the right-hand side of the icon field 500 are displayed fully on the display 200. As illustrated in Figure 4B, icons of the icon field 500 are displayed on the display (some of which are different from those shown on the display in Figure 4A) and therefore a user may access or select a function associated with one of those icons.

For example, the icon 510 (which shows a symbol corresponding to a camera) could be associated with a camera function of the device. A user may touch the front touch sensitive surface 310 at a position substantially corresponding to the icon 510. The device 10 would detect this user input as described above and activate the camera function accordingly. For example, the camera function could allow the device 10 to capture images using the video camera 240.

Should the user wish to access or view other icons of the icon field 500 not currently displayed on the display 200, they may move the device (for example to the left as indicated by an arrow 516) accordingly. The device 10 is operable to detect the motion of the device 10 with respect to a real-world environment, for example by using the motion input unit 400, and control the display of the icon field accordingly.

More generally, in embodiments, the CPU 100 is operable to generate a two-dimensional image field, such as the icon field 500. The CPU 100 is operable to control the display to display an image region corresponding to a portion of the two-dimensional image field so that the device 10 appears to be positioned at an image viewing position with respect to the two-dimensional image field. The image viewing position is a virtual position of the device 10 with respect to the image field (e.g. icon field 500) so that a portion of the image field can be displayed on the display. For example, the image viewing position could correspond to that illustrated in Figure 4A or Figure 4B, although any suitable image viewing position could be used. It will be appreciated that the portion of the image field displayed on the display could correspond to the whole image field. In other words, in some embodiments, all of the image field may be displayed on the display 200.

In embodiments, the device 10 is operable to detect motion of the device 10 with respect to the real-world environment using the accelerometers and/or the gyroscopes of the motion input unit 400. However, any other suitable motion detector, such as optical flow by analysis of images captured by the camera 240 of the real-world environment, may be used. The use of optical flow to detect motion of the device with respect to the real-world environment will be described in more detail later below.

In embodiments, the device 10 comprises a controller (such as CPU 100 and GPU Video 220) operable to control display of the image region so that the image viewing position moves with respect to the two-dimensional image field in response to detected motion of the device 10. For example, a user may move the device left and right as illustrated in Figure 4A and 4B. In embodiments, the device 10 is operable to control display of the icon field accordingly so that the viewing position moves left and right in response to the detected motion of the device.

Although Figures 4A and 4B illustrate the icon field 500 such that four icons can be displayed in the vertical direction on the display, it will be appreciated that the icon field may comprise any number of icons in any suitable arrangement. Therefore, the icon field may be larger than the display in both the horizontal direction and vertical direction. Here, horizontal should be taken to mean a direction parallel to a first edge of the display (such as an edge 520 in Figure 4A) and vertical should be take to mean a direction normal (at right-angles) to the first edge of the display. However, it will be appreciated that "horizontal" and "vertical could be defined with respect to the device 10 in any suitable manner.

Accordingly, in embodiments, the device 10 is operable to detect motion of the device 10 in a plane parallel to an image plane of the display. For example, the device 10 could detect vertical, horizontal, diagonal motion or any other motion of the device 10 in the plane of the display. In embodiments, the device is operable to control the display of the image region (e.g. portion of the icon field 500) in response to detected motion of the device 10 in a plane parallel to the image plane of the display so that the image viewing position moves with respect to the image field in an image plane of the image field.

In some embodiments, the device 10 is operable to generate the image field so that the image field is in an image plane substantially parallel to the image plane of the display. This means that when the image region displayed on the display 200 is changed (i.e. the viewing position is moved) by the device 10 in response to detected motion, the image field will appear to move parallel to the display without the icons appearing to get closer or further away from the display.

However, it will be appreciated that the image field need not be parallel to the image plane of the display. For example, the image field could be generated by the device 10 so that the plane of the image field is at an acute or obtuse angle with respect to the image plane of the display. In some embodiments, the device is operable to generate a plurality of icon fields and display them in a stacked arrangement at an angle to the plane of the display. In embodiments, the user can then navigate between icon fields as described above by moving the device 10 appropriately (e.g. in a direction normal to the plane of the display) and select an icon field for display by touching the front touch sensitive surface 310 at a position corresponding to the desired icon field. The device 10 is then operable to display the selected icon field as described above with reference to Figures 4A and 4B.

Where a stacked arrangement is used, it is in fact a three-dimensional arrangement of two-dimensional image fields.

So as to assist the user in navigating around the image field (such as the icon field 500), in embodiments, the CPU 100 is operable to correlate movement of the device with movement of the image region with respect to the image field so that the image field appears to be substantially stationary with respect to the real-world environment. To achieve this functionality, the device 10 is operable to detect a distance that the device 10 moves during motion and in what direction the device 10 is moving using known techniques, for example by using data from the motion input unit 400. The CPU 100 is operable to move the viewing position with respect to the image field in substantially the opposite direction from the detected motion and by substantially the same distance as the detected motion. Therefore, the image field will appear to be substantially stationary with respect to the real-world environment.

In embodiments, in order to improve the scrolling (navigating) experience for the user, the device is operable to detect how far the device 10 has moved from a physical position as detected for a previous image frame. For example, if a frame update rate of the display 200 is 25 frames per second (fps), then the device 10 is operable to detect a physical distance that the device moves in 1/25 second (0.04 seconds) with respect to the previous image frame. Here, 1/25 second is referred to the image frame time period, although any other suitable image frame time period and frame update rate could be used.

The device is operable to apply the detected physical distance as an offset to the viewing position for a previous frame in the opposite direction to the detected motion so as to generate the viewing position for the current frame. However, it will be appreciated that the distance that the device moves could be detected over any other suitable time period, although preferably the distance that the device moves is detected over an integer multiple of image frame time periods.

In some embodiments, the device is operable to detect rotational motion of the device 10 about an axis normal (at right-angles) to the display. In embodiments, the device 10 is operable to rotate the image field with respect to the device 10 so that motion of the image field, for example left and right as described above with reference to Figures 4A and 4B, is relative to the motion of the device 10 rather than defined with respect to physical attributes of the device such as the orientation of the display 200. In some embodiments, the image field is initially generated in a default orientation with respect to the display, for example on switching on the device 10, with subsequent rotational motion being accounted for as mentioned above as appropriate.

In some embodiments, rotational movement of the device 10 can cause the device to carry out an image cropping operation such as an image cropping (trimming) operation known in the art. However, it will be appreciated that any other suitable function or operation of the device 10 could be activated in response to rotational movement of the device 10.

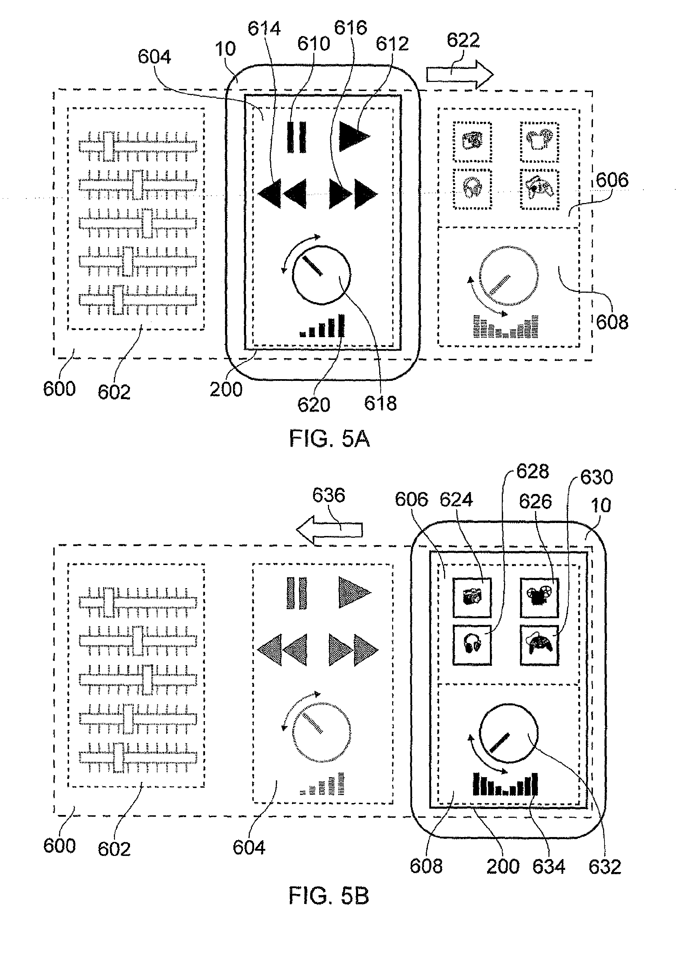

Although selection of an icon from an icon field has been described above with reference to Figures 4A and 4B, it will be appreciated that the device 10 may have other functions which may be related to icon function selection. In embodiments, the image field comprises a plurality of function control images associated with respective functions of the device 10. In some embodiments, the function control images comprise function activation icons such as the icons of the icon field 500 as described above. However, in some embodiments, more complex functionality and control can be carried out. This will now be described with reference to Figures 5A and 5B.

Figures 5A and 5B are schematic diagrams of a portable electronic device and an image field comprising function fields in accordance with embodiments of the present invention. In particular, Figure 5A shows the device 10 together with a two-dimensional image field 600. The image field 600 comprises a function field 602, a function field 604, a function field 606 and function field 608. The function field 602 is associated with graphic equaliser functions of a music player function of the device 10.

The function field 604 is associated with music controls of the music player. In particular, the function field 604 comprises a plurality of function control images. In embodiments, each function control image is associated with a function of the device 10. In the embodiment illustrated in Figure 5A, the function control images of the function field 604 correspond to "pause" 610, "play" 612, "rewind" 614, "fast forward" 616, volume control dial 618, and volume indicator 620, although it will be appreciated that any other function of the device could be represented by the function control images.

In Figure 5A, the function field 604 is illustrated as being displayed on the display 200. Accordingly, by appropriate user input to the front touch sensitive surface 310 at a position corresponding to a function control image, the device 10 can activate a function associated with a function control image.

For example, the user could touch the function control image "play" 612. The device 10 is operable to detect touch input as described above at the position corresponding to the function control image 612 and start playing a music track. As another example, the user could touch the volume control dial 618 and drag their finger in a radial direction with respect to an axis of the volume control dial normal to the display 200. The device 10 is operable to detect this input as described above and adjust the volume of music accordingly. In some embodiments, the device 10 is operable to display the volume indicator 620 so as to provide a visual indication of the volume of the music. However, it will be appreciated that any sort of media could be reproduced such as audio and/or video using appropriate control functions of the device 10.

In the embodiment illustrated in Figure 5A, the function field 604 is displayed on the display. However, to access other function fields such as those associated with function field 602 or function fields 606 and 608, in embodiments the device 10 is operable to detect motion of the device with respect to the real-world environment in a similar manner to that described above with reference to Figures 4A and 4B.

For example, a user may move the device to the right as indicated by an arrow 622 in Figure 5A. Accordingly, in embodiments, the device is operable to move the image viewing position with respect to the image field 600 in response to the detected motion so that the function regions 606 and 608 are displayed on the display 200 as illustrated in Figure 5B.

Figure 5B schematically shows the device 10 together with the image field 600 so that the function regions 606 and 608 are displayed on the display 200. The function region 606 comprises four function control images corresponding to icons. In the embodiment shown in Figure 5B, the function control images of the function region 6060 correspond to a camera icon 624, a cinema icon 626, a headphones icon 628, and a game controller icon 630. A user may select a function associated with an icon in a similar manner to that described above with reference to Figure 4A and 4B. In other words, the function region 606 can be thought of as an icon field with the image field 600 comprising that icon field.

Function region 608 comprises a balance control dial 632 together with a balance indicator 634. A user can operate the balance control dial 632 in a similar manner to the volume control dial 618 described above so as to cause the device 10 to control the audio balance of reproduced audio. In embodiments, the balance indicator 634 provides a visual indication of the audio balance and is controlled by the CPU 100 in response to user input to the first touch sensitive surface 310 at a position corresponding to the balance control dial 632.

If a user wishes to adjust equalisation of reproduced media, for example using function field 602, they can move the device to the left as indicated by arrow 636 in Figure 5B. As mentioned above, the device 10 is operable to detect the motion (movement) of the device with respect to the real-world environment and control the display 200 to display the function field 602. However, if the user wishes to access the function field 604, for example to adjust the volume or pause playback of media, they can stop moving the device when the function field 604 is displayed on the display 200. In other words, when the device 10 detects movement of the device 10, the CPU 100 can cause the image region to scroll (move) with respect to the image field so that different portions or parts of the image field are displayed on the display 200.

In embodiments, so as to assist a user in accessing more frequently activated functions of the device such as music controls of a media player, in embodiments, the device 10 is operable to generate the image field (such as image field 600, or icon field 500) so that function control images associated with more frequently activated functions of the device are positioned towards the centre of the image field and function control images associated with less frequently activated functions are positioned towards edges of the image field. An example of this is illustrated in Figures 5A and 5B.

In Figures 5A and 5B the function field 602, which is associated with graphic equaliser functions of a music player function of the device 10, is less likely to be activated as frequently as media controls such as "play", "pause", volume control and the like as provided by the function control images of the function field 604.

For example, a user may adjust the equalisation of the sound when they start playback of a particular music album but not once playback has started. Additionally, the user is less likely to adjust audio balance, for example using the function control field (balance control dial 632) of the function field 608. Therefore, the function fields 602, 606, and 608 are generated so that they are towards the edges (the outside) of the image field 600, and function field 604 comprising the function control images 610, 612, 614, 616, 618 which relate to media playback are generated so that they are towards the centre or middle of the image field 600. Therefore, a user can quickly access function control images associated with commonly used functions by moving the device 10 with respect to the environment so that the device 10 causes the viewing position to move towards the centre of the image field in response to the detected motion.

As another example, the device 10 could generate the image field so that function control images associated with more frequently accessed functions of the device are arranged towards a bottom left corner of the image field. Accordingly, to quickly access those function control images, a user merely has to move the device diagonally down and to the left. However, it will be appreciated that any other suitable position for the function fields and the function control images with respect to the image field could be used.

The device 10 can learn which function control images are more frequently used by the user of that device, by maintaining a record of the frequency and duration of access of various functions. Alternatively (or in addition), a predetermined set of generally more frequently accessed functions can be provided with the device.

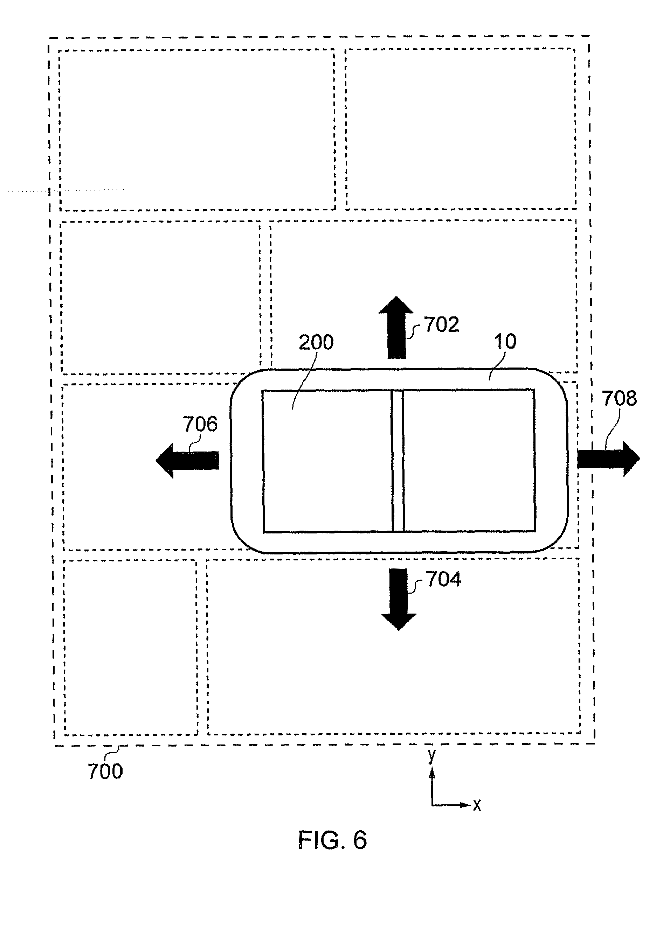

In embodiments, the two-dimensional image field comprises an image for viewing by the user. For example, the image could be a page of a book or graphic novel, although the image field could comprise any other suitable image such as a photograph, sequence of images (e.g. video images), array of thumbnail images and the like. This will now be described in more detail with reference to Figure 6.

Figure 6 is a schematic diagram of the portable electronic device 10 and an image field 700 in accordance with embodiments of the present invention. In the embodiment shown in Figure 6, the image field 700 comprises an image corresponding to a page of a graphic novel (i.e. a book including images, in a form which is displayable on a computer screen). As illustrated in Figure 6, the device 10 is operable to cause the display 200 to display an image region corresponding to a portion of the image field 700. As mentioned above, in embodiments, the device is operable to detect motion of the device 10 with respect to the real-world environment and cause the viewing position to move with respect to the image field 700. For example, a user may move the device up in the direction of arrow 702. The device is operable to move the viewing position with respect to the image field 700 so that the image field 700 appears to move down. However, it should be understood that terms "up" and "down" should be taken as relative terms with respect to an orientation of the device and/or the image field.

In embodiments, the device 10 is operable to generate the image field 700 so that it is in image plane substantially parallel to the image plane of the display. Additionally, in some embodiments, the CPU 100 is operable to control the display of the image region in response to detected motion of the device so that the image viewing position moves with respect to the image field in the image plane of the image field. For example, referring to Figure 6, a user may move the device up (as indicated by the arrow 702), down (indicated by arrow 704), left (indicated by arrow 706), and/or right (indicated by arrow 708), or any combination of up, down, left, and right.

In other words, movement of the device in a plane parallel to the plane of the display 200 can be thought of as movement in the horizontal (x) direction and vertical direction (y) with respect to the image field 700. Motion of the device perpendicular to the plane of the image field (such as image field 700, image field 600, or icon field 500) can be thought of as motion towards and away from the image field, that is in a z direction. It will be appreciated that the x, y, and z direction may be defined with respect to the image field, the device or any other real-world or virtual environment feature. Furthermore, any other suitable coordinate system may be used.

In embodiments, the device is operable to carry out a zooming operation on the image field in response to motion of the device in a direction perpendicular to the plane of the display so that the image region displayed on the display corresponds to a zoomed region of the image field. In some embodiments, movement of the device in a direction perpendicular to the plane of the image field causes the device to carry out a zooming operation. Here "zooming" operation is taken to mean an enlarging or shrinking operation which enlarges (makes bigger) or shrinks (makes smaller) the portion of the image field displayed on the display 200.

For example, with reference to Figure 6, movement of the device in a direction out of the page (e.g. towards the user), may cause the device 10 to apply a zooming operation so that the viewing position appears to move away from the image field 700, thus causing more of the image field 700 to be displayed, but at a smaller size. Similarly, referring to Figure 6, movement of the device in a direction into the page (e.g. away from the user) may cause the device 10 to apply a zooming operation so that the viewing position appears to move towards the image field 700, thus causing less of the image field to be displayed but at a larger size.

Therefore, by suitable movement of the device 10, a user can navigate around a page of a book, graphical novel, photo or any other suitable image without obscuring the image by touching the touch sensitive surface 310. Furthermore, embodiments of the present invention allow a user to zoom in on detail of an image and navigate around the image simply by moving the device appropriately. This makes it easier to find a desired place on the page or image without breaking the flow of a reading experience.

As mentioned above, in embodiments, the device is operable to detect motion of the device 10 with respect to the real-world environment using data from the accelerometers and/or gyroscopes of the motion control unit 400. However, in some embodiments, the device 10 is operable to carry out optical flow image processing on images captured by the camera 240 so as to detect motion of the device with respect to the real-world environment. In embodiments, the optical flow image processing comprises subtracting a current image from a previous image to generate motion vectors using known techniques. The detected motion vectors are used to determine how far, and in which direction, the device 10 has moved. However, it will be appreciated that any other suitable optical flow processing technique could be used. Optical flow image processing techniques are known in the art and so shall not be described in detail herein.

In some embodiments, data from the motion input unit 400 is correlated with optical flow data generated from the images captured by the camera 240 by the CPU 100 so as to provide a cross-check of the data. For example, any data for which a difference between position and/or velocity data generated by the motion unit 400 and position and/or velocity data generated using optical flow processing is greater than an accuracy threshold is ignored. However, it will be appreciated that any suitable correlation technique may be used. This improves the accuracy of the movement data.

In some embodiments, a user may place the device on a flat planar surface such as a table top so as to assist them in moving the device in a plane parallel to the plane of the display. This helps prevent any unintended zooming operations. However, if the camera 240 is positioned on the rear of the device (for example as illustrated in Figure 1B), then optical flow processing may not be possible because the camera 240 may not receive enough ambient light to carry out effective optical flow processing. In other words, contrast and brightness of a captured image may not be sufficient to allow optical flow processing.

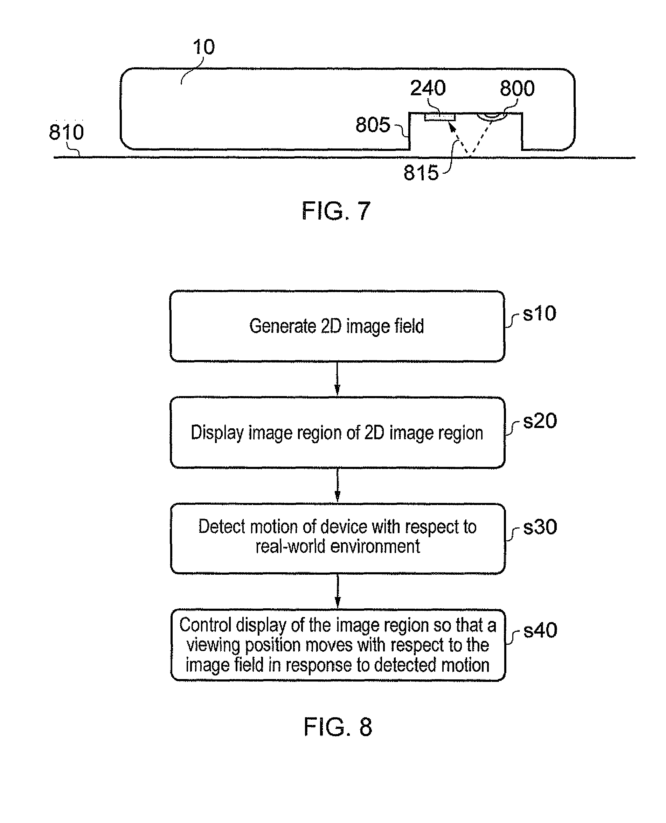

Accordingly, in embodiments of the present invention, the device 10 comprises a light source operable to illuminate a surface on which the device 10 is placed, the light source being positioned with respect to the camera so that light is reflected from the surface into the camera. This will now be described in more detail with reference to Figure 7.

Figure 7 is a schematic diagram of the portable electronic device 10 comprising a light source 800 in accordance with embodiments of the present invention. In particular, Figure 7 schematically shows a cross-sectional view of the device 10 together with the camera 240 and light source 800. In Figure 7 the device 10 is illustrated on a surface 810, such as a table top, although the surface 810 could be any suitable surface, planar or non-planar.

In embodiments, the camera 240 and the light source 800 are positioned in a recess 805 of the device 10 so that the camera 240 and the light source 800 are not in contact with the surface 810 on which the device 10 is placed. However, any other suitable positioning of the light source 800 and camera 240 may be used.

The light source 800 may be any suitable passive or active light source such as a light emitting diode (LED), laser, filament lamp, organic light emitting diode (OLED), luminescent compound, a light path from another part of the device for ambient light, and a light path from a backlight of the display 200, although any other suitable light source could be used.

In embodiments, the light source is positioned with respect to the camera so that light emitted from the light source can be reflected from the surface on which the device is placed into the camera. Referring to Figure 7, the light source 800 is arranged with respect to the camera 240 so that light from the light source is reflected from the surface 810 into the camera 240 as illustrated by the dashed line 815. In other words, light from the light source 800 can illuminate the surface 810 such that an image for optical flow processing can be captured by the camera 240 with sufficient contrast and brightness.

Depending on the lens arrangement used, the camera may or may not be able to focus fully on the surface 810. Preferably, a lens arrangement is used so that the camera can focus fully at a close distance. If not, then preferably the camera can focus sufficiently so as to be able to capture an amount of image content from the surface so as to allow optical flow techniques to be used.

Additionally, in some embodiments, the rear touch sensitive surface 320 may be used as a motion detector. For example the device may be placed on a suitable surface such as a bumpy surface comprising nodules which make physical contact with the rear touch sensitive surface 320. However, it will be appreciated that the motion of the device 10 with respect to the real world environment could be detected using any or all of the accelerometers and/or gyroscopes of the motion input unit 400, optical flow processing on images captured by the camera 240, and touch input to the rear touch sensitive surface 320. Additionally, data from the accelerometers and/or gyroscopes of the motion input unit 400, optical flow processing on images captured by the camera 240, and touch input to the rear touch sensitive surface 320 may be combined as appropriate and/or cross correlated as appropriate by the CPU 100 so as to improve the accuracy of detection of motion of the device 10 with respect to the real-world environment.

In some embodiments, the portable electronic device 10 is operable to communicate with an entertainment device such as a Sony® PlayStation 3® entertainment device using the wireless communication unit 140, for example by using the Bluetooth communication standard. In embodiments, the portable electronic device 10 is operable to transmit motion data to the entertainment device using the wireless communication unit 140 via a communication link which relates to movement of the device with respect to the real-world environment. In embodiments, the motion data comprises data from any or all of the motion input unit 400, optical flow processing, and/or the rear touch sensitive surface 320. In other words, the portable electronic device 10 can act as a mouse input device for the entertainment device in a similar manner to a mouse typically used for personal computers.

Additionally, in some embodiments, the entertainment device is operable to transmit function button data to the PED 10 so as to cause the PED 10 to display an icon (or other control image corresponding to a suitable input function) to the entertainment device for selection by a user. The PED 10 is operable to transmit function button activation data to the entertainment device in response to user input to the front touch sensitive surface at a position corresponding to an icon or other control image.

For example, in addition to the PED 10 displaying buttons (icons) corresponding to a left and right mouse button typically found on a mouse, the entertainment device could transmit data to the PED 10 to cause the PED 10 to display a scroll wheel. By appropriate user input to the scroll wheel via the front touch sensitive surface 310 a user could then cause the PED 10 to control the entertainment device to scroll an image which is displayed by the entertainment device. In other words, in embodiments, the PED 10 acts as a mouse with configurable buttons and functions for controlling the entertainment device. This provides a flexible input system for the entertainment device.

Additionally, the PED 10 could mimic the functionality of a so-called "gamer" mouse which typically has many functions and buttons to allow a game player to control many different aspects of a game executed on a personal computer or entertainment device. In embodiments, the PED 10 can provide many different dynamically configurable inputs via the front touch sensitive surface 310 based on the function button data sent from the entertainment device. This improves flexibility of the gaming system as well as providing a more dynamic gaming experience because the entertainment system can cause the PED 10 to provide different functions and buttons for user activation depending on a state of the game.

More generally, in embodiments, the portable electronic device 10 is operable to receive, from an entertainment device such as a PS3®, control function configuration data relating to control functions of the entertainment device for activation by the portable electronic device 10. In embodiments, the control function configuration data comprises the function button data described above.

In embodiments, the portable electronic device 10 is operable to receive the function configuration data from the entertainment device via a Bluetooth communication link using the wireless communication unit 140, although it will be appreciated that any suitable receiving means may be used. Each of the control functions is associated with a control image for display by the portable electronic device. The display 200 is operable to display the control images in accordance with the function control configuration data sent by the entertainment device. For example, the control images could comprise icons corresponding to a left and right mouse button for display by the display 200.

As mentioned above, in embodiments, the touch sensitive surface 310 is arranged substantially to correspond with the display 200. This enables a user to select a control image by appropriate touch input to that control image on the touch sensitive surface 310. Additionally, as mentioned above, the device 10 is operable to detect motion of the portable entertainment device 10 with respect to the real-world environment using any or all of the motion input unit 400, optical flow, and/or touch input to the rear touch sensitive surface 320, although any other suitable motion detecting means may be used.

The portable electronic device 10 is operable to transmit, to the entertainment device, motion data relating to the detected motion of the device and control data relating to user input to the touch sensitive surface at a position corresponding to a control image. In embodiments, the portable electronic device 10 is operable to transmit the motion data and the control data to the entertainment device using the wireless communication unit 140, for example via a Bluetooth communication link. However, it will be appreciated that any suitable transmitting means could be used to transmit the motion data and the control data from the portable electronic device 10 to the entertainment device.

In embodiments, the entertainment device is operable cause a mouse pointer or other suitable indicator to be displayed on a display in response to the motion data transmitted from the portable electronic device 10. A user can therefore control the position of the mouse pointer by moving the portable electronic device 10 in a suitable manner. For example, motion of the device 10 in a two-dimensional plane, such as when the device is placed on a surface (e.g. surface 810 as illustrated in Figure 7) would cause the entertainment device 10 to move the mouse pointer in an appropriate manner similar to the functionality of a computer mouse.

Furthermore, in embodiments, the entertainment device is operable to activate a control function in response to the control data sent from the portable electronic device 10. For example, a user may touch the front touch sensitive surface 310 at a position corresponding to the display of a left mouse button. The portable electronic device 10 sends the associated control data to the entertainment device, and the entertainment device activates a function accordingly. In other words, a user can use the portable electronic device 10 to "click" on an image (select a function) which the entertainment device 10 is displaying in a similar manner to the functionality of a computer mouse. However, it will be appreciated that any other function of the entertainment device could be controlled using the portable electronic device 10.

In some embodiments, the motion data can be sent from the portable electronic device 10 separately to the control data. Additionally, the motion data can be sent without the control data, or the control data can be sent without the motion data. In other words, the portable electronic device 10 can act as configurable remote for the entertainment device, for example to control media playback functions of the entertainment device. In these embodiments, the portable electronic device 10 is configured using the function configuration data sent from the entertainment device. However, it will be appreciated that the function configuration data may be stored on the portable electronic device 10 rather than being transmitted from the entertainment device, for example in the hard disc drive 180, although any other suitable storage medium could be used.

A method of controlling a portable electronic device in accordance with embodiments of the present invention will now be described with reference to Figure 8.

Figure 8 is a flowchart of a method of controlling a portable electronic device in accordance with embodiments of the present invention. At a step s10, the device 10 generates a two-dimensional image field as described above such as icon field 500, image field 600, and/or image field 700, although the device 10 could generate any suitable image field.

Then, at a step s20, the device 10 causes the display 200 to display an image region corresponding to a portion of the two-dimensional image field so that the device appears to be positioned at an image viewing position with respect to the two-dimensional image field. For example, the display 200 could display a portion of the icon field 500 as illustrated in Figure 4A.

At a step s30, the device 10 detects motion of the device 10 with respect to the real-world environment as described above, for example based on data from the motion input unit 400, optical flow processing, and/or input via the rear touch sensitive surface 320.

Then, at a step s40, the device 10 controls the display of the image region so that the viewing position moves with respect to the image field in response to detected motion as described above. For example, referring to Figure 4B, movement of the device to the left (as indicated by the arrow 516), causes the device 10 to move the viewing position to the right with respect to the icon field 500. In embodiments, the method includes any or all of the processes needed to achieve the functionality of the embodiments described herein.

In embodiments, the two-dimensional image field may comprise any or all of one or more icon fields, one or more function fields, and one or more images for viewing by a user. However, the image field may comprise any other suitable image or field, for example for controlling the device. Additionally, one or more two-dimensional image fields may be generated by the device 10. For example, a first image field could comprise an icon field, a second image field could comprise one or more function fields, and a third image field could comprise an image for viewing by a user. In embodiments, the device is operable to generate the image fields so that they are arranged in layers. In response to detected motion in a direction along an axis normal to the display (for example, towards or away from the user), the device 10 is operable to display a different image field. However, any suitable method of moving (or selecting) between image fields could be used. Additionally, for example, a function of the device could be to display an appropriate image field as described above in response to user selection of an icon from an icon field.

It will be appreciated that any of the functionality of the above described embodiments may be combined as appropriate.

It will be appreciated that in embodiments of the present invention, elements of the entertainment method may be implemented in the entertainment device in any suitable manner. Thus the required adaptation to existing parts of a conventional equivalent device may be implemented in the form of a computer program product comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable or bespoke circuit suitable to use in adapting the conventional equivalent device.

In conclusion, although a variety of embodiments have been described herein, these are provided by way of example only, and many variations and modifications on such embodiments will be apparent to the skilled person and fall within the scope of the present invention, which is defined by the appended claims and their equivalents.

## Claims

1. A portable electronic device comprising:
an image field generator operable to generate a two-dimensional image field;
a display operable to display an image region corresponding to a portion of the two-dimensional image field so that the device appears to be positioned at an image viewing position with respect to the two-dimensional image field;
a motion detector operable to detect motion of the device with respect to a real-world environment; and
a controller operable to control display of the image region so that the image viewing position moves with respect to the two-dimensional image field in response to detected motion of the device.

2. A device according to claim 1, in which the image field generator is operable to generate the image field so that the image field is in an image plane substantially parallel to an image plane of the display.

3. A device according to claim 2, in which the controller is operable to control the display of the image region in response to detected motion of the device in a plane parallel to the image plane of the display so that the image viewing position moves with respect to the image field in the image plane of the image field.

4. A device according to claim 3, in which the controller is operable to correlate movement of the device with movement of the image region with respect to the image field so that the image field appears to be substantially stationary with respect to the real-world environment.

5. A device according to any one of the preceding claims, in which the controller is operable to carry out a zooming operation on the image field in response to motion of the device in a direction perpendicular to the plane of the display so that the image region displayed on the display corresponds to a zoomed region of the image field.

6. A device according to any one of the preceding claims, in which the motion detector comprises one or more accelerometers operable to detect motion of the device.

7. A device according to any one of the preceding claims, comprising a camera operable to capture images of the real-world environment, in which the motion detector is operable to carry out optical flow image processing on the captured images so as to detect motion of the device with respect to the real-world environment.

8. A device according to claim 7, comprising a light source operable to illuminate a surface on which the device is placed, the light source being positioned with respect to the camera so that light emitted from the light source can be reflected from the surface on which the device is placed into the camera.

9. A device according to any one of the preceding claims, comprising:
a touch sensitive surface arranged to substantially correspond with the display; and
function control means operable to control a function of the device in response to user input to the touch sensitive surface.

10. A device according to claim 9, in which:
the image field comprises a plurality of function control images associated with respective functions of the device; and
the function control means is operable to activate a function associated with a function control image in response to user input to the touch sensitive surface at a position on the display corresponding to that function control image.

11. A device according to claim 10, in which the function control images comprise function activation icons for selection by a user.

12. A device according to claim 10 or claim 11, in which the image field generator is operable to generate the image field so that function control images associated with more frequently activated functions of the device are positioned towards the centre of the image field and function control images associated with less frequently activated functions are positioned towards edges of the image field.

13. A method of controlling a portable electronic device, the method comprising:
generating a two-dimensional image field;
displaying, on a display, an image region corresponding to a portion of the two-dimensional image field so that the device appears to be positioned at an image viewing position with respect to the two-dimensional image field;
detecting motion of the device with respect to a real-world environment; and
controlling display of the image region so that the image viewing position moves with respect to the two-dimensional image field in response to detected motion of the device.

14. A computer program for implementing the method of claim 13.

15. A portable electronic device, comprising:
receiving means operable to receive, from an entertainment device, control function configuration data relating to control functions of the entertainment device for activation by the portable electronic device, each of the control functions being associated with a control image for display by the portable electronic device;
a display operable to display the control images in accordance with the control function configuration data sent by the entertainment device;
a touch sensitive surface arranged to substantially correspond with the display;
motion detecting means operable to detect motion of the portable entertainment device with respect to the real-world environment;
transmitting means operable to transmit, to the entertainment device, motion data relating to the detected motion of the device and control data relating to user input to the touch sensitive surface at a position corresponding to a control image.
